# EUROPÄISCHE PATENTSCHRIFT

(11) **EP 2 573 012 B1**
(45) Veröffentlichungstag und Bekanntmachung des Hinweises auf die Patenterteilung: **09.04.2014**
(21) Anmeldenummer: 11182771.3
(22) Anmeldetag: 26.09.2011
(51) Int. Cl.: B65G 47/14

(54) **Vorrichtung und Verfahren zum Vereinzeln von in ein automatisiertes Lager einzulagernden Stückgütern**
Device and method for singulating piece goods to be stored in an automated storage
Dispositif et procédé pour séparer des objets à stocker dans un entrepôt automatisé

(43) Veröffentlichungstag der Anmeldung: 27.03.2013
(73) Patentinhaber: CareFusion Germany 326 GmbH, 53539 Kelberg (DE)
(72) Erfinder: Hellenbrand, Christoph, 56761 Kaifenheim (DE); Gross, Dietmar, 5539 Kelberg (DE)
(74) Vertreter: Zenz

(56) Entgegenhaltungen:
- EP-A2- 0 945 373
- US-A- 5 647 472
- US-A- 5 678 681

## Beschreibung

Die Erfindung betrifft eine Vorrichtung zum Vereinzeln von in ein automatisiertes Lager einzulagernden Stückgütern mit einem Stufenförderer zum Fördern von Stückgütern aus einem Vorrat über eine Oberkante des Stufenförderers hinweg auf eine Auffangeinrichtung, wobei der Stufenförderer eine geneigte Auflagefläche und eine parallel über der Auflagefläche bewegbare erste Stufe mit einer zur Auflagefläche parallelen Förderkante umfasst, wobei der Abstand zwischen der Auflagefläche und der Förderkante einer minimalen Stufenhöhe entspricht, die zum Aufwärtsschieben quaderförmiger Stückgüter ausreicht, und einer Steuereinrichtung zum Ansteuern des Stufenförderers, die mit einem Sensor gekoppelt ist, der erfasst, ob ein Stückgut über die Oberkante hinweg gefördert worden ist. Ferner betrifft die Erfindung ein Verfahren zum Vereinzeln von in ein automatisiertes Lager einzulagernden Stückgütern unter Verwendung eines Stufenförderers mit einer geneigten Auflagefläche mit einer Oberkante, einem am unteren Ende der Auflagefläche angeordneten Vorrat zur Aufnahme von Stückgütern und einer vom Vorrat bis zur Oberkante parallel über der Auflagefläche bewegbaren ersten Stufe mit einer zur Auflagefläche parallelen Förderkante, wobei der Abstand zwischen der Auflagefläche und der Förderkante einer minimalen Stufenhöhe entspricht, die zum Aufwärtsschieben quaderförmiger Stückgüter ausreicht, wobei der Vorrat mit Stückgütern befüllt wird und die erste Stufe solange wiederholt vom Vorrat hin zur Oberkante bewegt wird, bis kein Fördern eines weiteren Stückguts über die Oberkante mehr erfasst wird.

Stufenförderer bzw. Verfahren der eingangs genannten Art sind beispielsweise aus den Druckschriften DE 10 2004 012 133 A1 und EP 1 652 799 A1 bekannt.

Um eine möglichst effektive Vereinzelung zu erreichen, d. h. um zu sichern, dass möglichst wenige Stückgüter gleichzeitig über die Oberkante der Auflagefläche hinwegtreten, wird eine geringe Höhe der Förderstufe angestrebt. Die Höhe der Förderstufe, d. h. der Abstand zwischen der Auflagefläche und der Förderkante (üblicherweise der oberen nach vorn weisenden Kante einer Förderplatte), sollte lediglich so hoch sein, dass die Stufe zum Aufwärtsschieben üblicher quaderförmiger Stückgüter ausreicht. Hierbei sind einerseits Unebenheiten und Kantenabrundungen der zu transportierenden quaderförmigen Stückgüter sowie andererseits die Bewegungsgeschwindigkeit der Förderstufe und die Masse der Stückgüter und die daraus resultierenden Trägheits- und Reibungskräfte zu berücksichtigen. Wird die Stufenhöhe zu gering gewählt, kann beispielsweise der Fall eintreten, dass sich die nach oben bewegende Förderstufe unter das Stückgut schiebt.

Die bekannten Stufenförderer haben aufgrund der geringen Stufenhöhe den Nachteil, dass sie nicht in der Lage sind, Stückgüter aufwärts zu befördern, bei denen dann, wenn sie auf der Auflagefläche aufliegen, keine zumindest näherungsweise senkrecht von der Auflagefläche abstehende Kante an der Förderstufe anliegen kann. Dies betrifft insbesondere zylinderförmige Stückgüter, wie beispielsweise Flaschen oder zylindrische Dosen.

Aufgabe der Erfindung ist es daher, eine Vorrichtung und ein Verfahren zum Vereinzeln zu schaffen, die bzw. das neben der Vereinzelung quaderförmige Stückgüter auch eine Vereinzelung zylinderförmiger Stückgüter gestattet, die mit den quaderförmigen Stückgütern in einem Vorrat gemischt einlagern.

Diese Aufgabe wird erfindungsgemäß durch eine Vorrichtung mit den Merkmalen des Anspruchs 1 bzw. ein Verfahren mit den Merkmalen des Anspruchs 9 gelöst.

Erfindungsgemäß ist eine Vorrichtung zum Vereinzeln der eingangs genannten Art dadurch gekennzeichnet, dass der Stufenförderer eine parallel über der ersten Stufe und der Auflagefläche bewegbare zweite Stufe mit einer Stufenhöhe aufweist, die mindestens so hoch ist, dass die zweite Stufe zum Fördern zylinderförmiger Stückgüter mit dem größten zu erwartenden Durchmesser geeignet ist, und dass die Steuereinrichtung so ausgebildet ist, dass sie den Stufenförderer derart ansteuert, dass nach einem Befüllen des Vorrats die erste Stufe solange wiederholt angesteuert wird, bis der Sensor kein Fördern eines weiteren Stückguts mehr erfasst, und daraufhin die zweite Stufe angesteuert wird.

Das eingangs genannte Verfahren zum Vereinzeln ist erfindungsgemäß dadurch gekennzeichnet, dass ein Stufenförderer verwendet wird, der eine parallel über der ersten Stufe und der Auflagefläche bewegbare zweite Stufe aufweist mit einer Stufenhöhe, die mindestens so hoch ist, dass die zweite Stufe zum Fördern zylinderförmiger Stückgüter mit dem größten zu erwartenden Durchmesser geeignet ist, wobei nach dem wiederholten Bewegen der ersten Stufe, bis kein Fördern eines weiteren Stückguts über die Oberkante mehr erfasst wird, die zweite Stufe vom Vorrat hin zur Oberkante bewegt wird. Vorzugsweise wird anschließend die zweite Stufe wiederholt vom Vorrat hin zur Oberkante bewegt, bis kein Fördern eines weiteren Stückguts über die Oberkante mehr erfasst wird.

Die Mindesthöhe der zweiten Stufe hängt zunächst von dem maximal zu erwartenden Durchmesser der zylinderförmigen Stückgüter und der Neigung der Auflagefläche ab und muss in jedem Fall gröβer als der Radius der zylindrischen Stückgüter abzüglich des Produkts aus dem Radius und dem Kosinus der Neigung sein. Die so ermittelte Mindeststufenhöhe erhöht sich noch aufgrund der beim Hochschieben auftretenden Reibungs- und Trägheitskräfte, wobei diese Erhöhung mit dem Verhältnis von Reibungs- und Trägheitskräften zum Gewicht des Stückguts wächst, jedoch nicht größer als der maximal zu erwartende Radius wird. Die Mindeststufenhöhe ist gegebenenfalls experimentell zu ermitteln.

Die Förderkante der ersten Stufe kann nicht nur von einer Kante einer Platte, sondern auch von einem gespannten Draht oder Seil gebildet werden. Vorzugsweise wird sie jedoch von der vorderen Oberkante einer Stufenplatte gebildet. Bei einer bevorzugten Vorrichtung umfasst die erste Stufe eine ebene Platte mit einer sich an die Förderkante anschließenden, zur Plattenebene senkrechten Förderfläche. Vorzugsweise umfasst auch die zweite Stufe eine ebene Platte mit einer zur Plattenebene senkrechten Förderfläche. Die Platte der ersten und/oder der zweiten Stufe kann auch aus einer Vielzahl paralleler, schwenkbar gekoppelter Streifensegmente gebildet werden, die in der Art eines Rolladens miteinander verbunden und über die Auflagefläche geführt sind. Darüber hinaus kann die Platte oder können die Segmente der zweiten Stufe von geringerer Dicke sein, als es der Stufenhöhe entspräche, beispielsweise ebenso dick wie die Platte oder die Segmente der ersten Stufe. In diesem Fall weist die zweite Stufe am oberen Rand eine von der Platte bzw. dem obersten Segment senkrecht zur Auflagefläche abgewinkelte Platte auf, deren Frontfläche die die Stufenhöhe bestimmende Förderfläche bildet.

Das Vorsehen der zweiten Stufe mit einer zum Transportieren zylinderförmiger Stückgüter geeigneten Stufenhöhe in Kombination mit der erfindungsgemäßen Reihenfolge des Einsatzes der ersten und zweiten Stufen gestattet nicht nur die Vereinzelung beliebiger Stückgutformen; sie sorgt außerdem dafür, dass zunächst die quaderförmigen Stückgüter aus dem Vorrat aussortiert werden, bevor die zylinderförmigen Stückgüter eingelagert werden.

Bei bevorzugten Ausführungsformen ist die Steuereinrichtung so ausgebildet, dass sie den Stufenförderer derart ansteuert, dass die erste Stufe entweder zurückgefahren oder mit der zweiten Stufe mitbewegt wird, während die zweite Stufe angesteuert wird. Bevorzugt ist das Mitbewegen der ersten Stufe. Dies vermeidet die Bildung eines Spalts unter der zweiten Förderstufe, in dem kleine Stückgüter eingeklemmt werden könnten.

Eine Weiterbildung der Erfindung ist dadurch gekennzeichnet, dass der Sensor ein Auftreffen von Stückgütern auf der Auffangeinrichtung erfasst, wobei die Steuereinrichtung bei Erfassen eines Auftreffens eines Stückguts oder mehrerer Stückgüter auf der Auffangeinrichtung das Fördern weiterer Stückgüter auf die Auffangeinrichtung solange unterbricht, bis das Stückgut bzw. die Stückgüter von der Auffangeinrichtung entnommen und weitertransportiert worden sind. Das Unterbrechen der weiteren Förderung von Stückgütern auf die Auffangeinrichtung ermöglicht eine ungestörte Erfassung und ein ungestörtes Ergreifen der auf der Auffangeinrichtung aufliegenden Stückgüter für deren Weitertransport in ein automatisiertes Lager.

Vorzugsweise weist die Auffangeinrichtung eine Platte auf, die um eine zur Oberkante parallele und benachbarte Achse schwenkbar ist, wobei ein Schwenkantrieb mit der Steuereinrichtung gekoppelt ist, wobei die Platte vor dem Fördern eines Stückguts über die Oberkante derart geneigt ist, dass sie von der Oberkante weg abfällt, so dass auftreffende Stückgüter auf der Platte abwärts rutschen können, und wobei die Steuereinrichtung bei Erfassen eines Auftreffens eines Stückguts oder mehrerer Stückgüter auf der Auffangeinrichtung die Platte über den Schwenkantrieb in die Horizontale bewegt, so dass das Rutschen der Stückgüter gebremst wird (entweder vollständig oder derart, dass das rutschende Stückgut ausreichend langsam gegen einen Anschlag rutscht). Die Platte ist vorzugsweise wenigstens 30° gegen die Horizontale geneigt, um ein Hinabrutschen der Packungen sicherzustellen.

Vorteilhafte und/oder bevorzugte Weiterbildungen der Erfindung sind in den Unteransprüchen gekennzeichnet.

Nachfolgend wird die Erfindung anhand eines in den Zeichnungen dargestellten bevorzugten Ausführungsbeispiels näher beschrieben. In den Zeichnungen zeigen:
Figur 1 eine schematische Schnittansicht der erfindungsgemäβen Vereinzelungsvorrichtung mit einem mit quaderförmigen und zylinderförmigen Stückgütern gefüllten Vorrat während des Förderns eines quaderförmigen Stückguts durch die erste Förderstufe;
Figur 2 die Vorrichtung gemäß Figur 1 beim weiteren Aufwärtsfördern des quaderförmigen Stückguts kurz vor dessen Übertritt über die Oberkante;
Figur 3 die in den Figuren 1 und 2 gezeigte Vorrichtung beim Übertritt des quaderförmigen Stückguts über die Oberkante des Stufenförderers;
Figur 4 die in den Figuren 1 bis 3 gezeigte Vorrichtung nach dem Auftreffen des quaderförmigen Stückguts auf der Auffangeinrichtung und beim Zurückfahren der ersten Förderstufe;
Figur 5 die in den Figuren 1 bis 4 gezeigte Vorrichtung, nachdem sämtliche quaderförmigen Stückgüter auf die Auffangeinrichtung gefördert und von dieser weitertransportiert worden sind, wobei die Vorrichtung beim Beginn des erneuten Hochfahrens der ersten Förderstufe gezeigt ist;
Figur 6 die in Figur 5 gezeigte Vorrichtung während des Hochfahrens der ersten Förderstufe;
Figur 7 die in den Figuren 5 und 6 gezeigte Vorrichtung zu Beginn des Hochfahrens der zweiten Förderstufe;
Figur 8 die in Figur 7 gezeigte Vorrichtung während des Hochfahrens der ein zylinderförmiges Stückgut bewegenden zweiten Förderstufe;
Figur 9 eine schematische Schnittseitenansicht des Stufenförderers mit den beiden Förderstufen;
Figur 10 eine Skizze, die beim Hochschieben eines zylinderförmigen Stückguts auftretende Kräfte und deren Einfluss auf die vorzusehende Mindeststufenhöhe veranschaulicht; und
Figur 11 eine schematische Schnittseitenansicht des Stufenförderers, bei der die Platten der beiden Förderstufen als Rolläden ausgeführt sind.

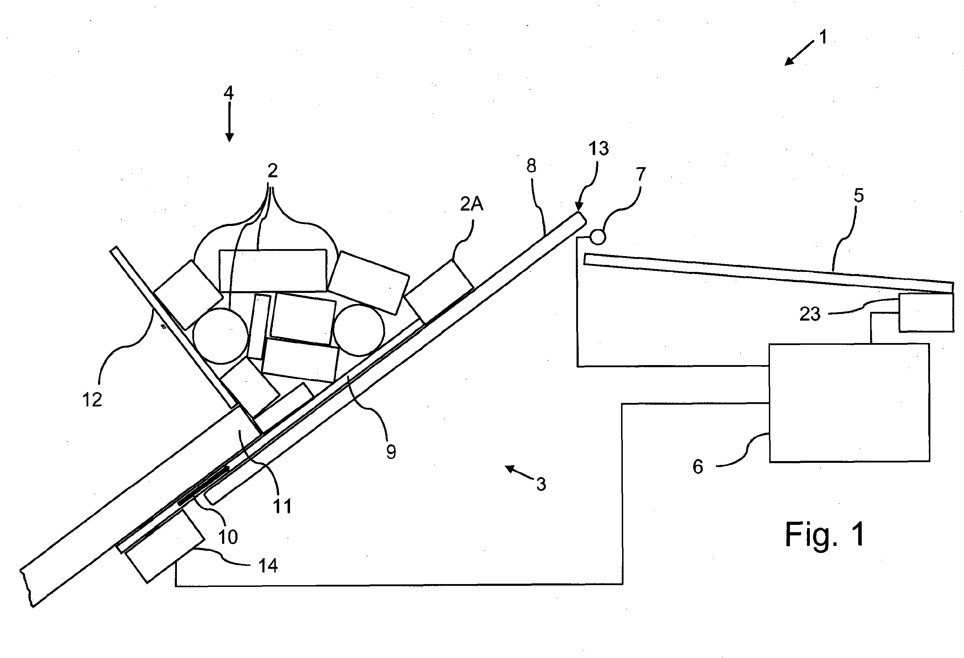

Figur 1 zeigt eine schematische Schnittseitenansicht der Vorrichtung 1 zum Vereinzeln von Stückgütern 2, die in ein automatisiertes Lager eingelagert werden sollen. Die einzulagernden Stückgüter 2 sollen zunächst vereinzelt, anschließend identifiziert und vermessen und dann in einer vorgegebenen Lage (Orientierung) an einem vorgegebenen Platz einer Einlagerungsvorrichtung (Greifer) eines automatisierten Lagers übergeben werden.

Die Vereinzelungsvorrichtung 1 umfasst einen Stufenförderer 3, der über einer schräg geneigten Ebene mit einer Auflagefläche 8 ausgebildet ist. Über der Auflagefläche 8 bewegt sich eine erste Förderstufe 9, die eine parallel über der Auflagefläche 8 geführte Platte mit einer Stirnfläche aufweist, wobei auf der Auflagefläche 8 und an der Stirnfläche der ersten Förderstufe 9 anliegende Stückgüter 2A von der Förderstufe 9 nach oben über eine Oberkante 13 der Auflagefläche 8 geschoben werden, wenn die Förderstufe 9 in Richtung des Pfeils 10 und angetrieben durch einen Antrieb 14 nach oben bewegt wird.

Anstelle der ersten Förderstufe 9 können auch mehrere erste Förderstufen vorgesehen sein, die übereinander und parallel zu der Auflagefläche 8 angeordnet sind. Darüber hinaus kann die Förderkante, d.h. die Oberkante der Stirnfläche der Förderplatte sowohl eine horizontale Lage, das heißt eine zur Bewegungsrichtung der Platte senkrechte Lage einnehmen als auch schräg zu dieser Orientierung angeordnet sein, wie dies in der bereits genannten Druckschrift EP 1 652 799 A1 beschrieben ist. Bei der bevorzugten Ausführungsform, die in der Figur 1 dargestellt ist, umfasst die erste Förderstufe 9 lediglich eine Förderplatte mit einer zur Bewegungsrichtung (Pfeil 10) senkrechten Stirnfläche und Förderkante.

Im unteren Abschnitt der geneigten Ebene ist über der Auflagefläche 8 und den Platten der Förderstufen durch Anordnung von seitlichen Begrenzungswänden 12 ein Vorratsbunker 4 ausgebildet, der eine Vielzahl von quaderförmigen und/oder zylinderförmigen Stückgütern 2 aufnehmen kann. Bei den Stückgütern handelt es sich vorzugsweise um Behälter oder Packungen mit Arzneimitteln, wie beispielsweise quaderförmigen Schachteln oder Flaschen und Dosen.

Benachbart zu der Oberkante 13 der Auflagefläche 8, über die die Stückgüter 2 von dem Stufenförderer 3 hinweg befördert werden, ist eine Auffangeinrichtung in Form einer Auffangfläche 5 angeordnet. Auf diese Auffangfläche 5 fallen die über die Oberkante 13 hinweg geschobenen Stückgüter 2. Ferner ist in Figur 1 schematisch ein Sensor 7 dargestellt, der erfasst, wenn ein Stückgut oder mehrere Stückgüter über die Oberkante 13 hinweg befördert worden sind und auf die Fläche 5 der Auffangeinrichtung auftreffen. Die Auffangfläche 5 ist geneigt, wobei sie von der der Oberkante 13 benachbarten Seite weg abfällt, so dass auftreffende Stückgüter sich von der Oberkante 13 weg bewegen (rutschen). Der Auffangeinrichtung ist ein Antrieb 23 zugeordnet, der die Auffangfläche 5 in eine waagerechte Position bewegen kann.

Sowohl der Sensor 7 als auch der Antrieb 14 des Stufenförderers 3 und der Antrieb 23 der Auffangeinrichtung sind mit einer Steuereinrichtung 6 gekoppelt. Die Steuereinrichtung 6 ist ferner mit einer (nicht dargestellten) Greifvorrichtung gekoppelt. Die Greifvorrichtung ist über der Auffangfläche 5 angeordnet und dient dazu, die aufliegenden Stückgüter 2 zu ergreifen, ggf. in den Erfassungsbereich eines Scanners zum Erfassen von aufgedruckten Identifikationsinformationen oder eines Sensors zum Erfassen von Abmessungen des Stückguts zu bringen und an eine Einlagerungsvorrichtung des automatisierten Lagers zu übergeben. Ferner kann über und/oder unter der Auffangfläche 5 ein mit der Steuereinrichtung 6 gekoppelter optischer Scanner oder eine Bildaufnahmeeinrichtung angeordnet sein, der bzw. die die Position und Lage (Orientierung) der auf der Auffangfläche 5 aufliegenden Stückgüter 2 erfassen kann, so dass die Steuereinrichtung 6 mit Hilfe dieser Informationen die Greifeinrichtung derart ansteuern kann, dass sie gezielt eines der aufliegenden Stückgüter ergreift und weitertransportiert.

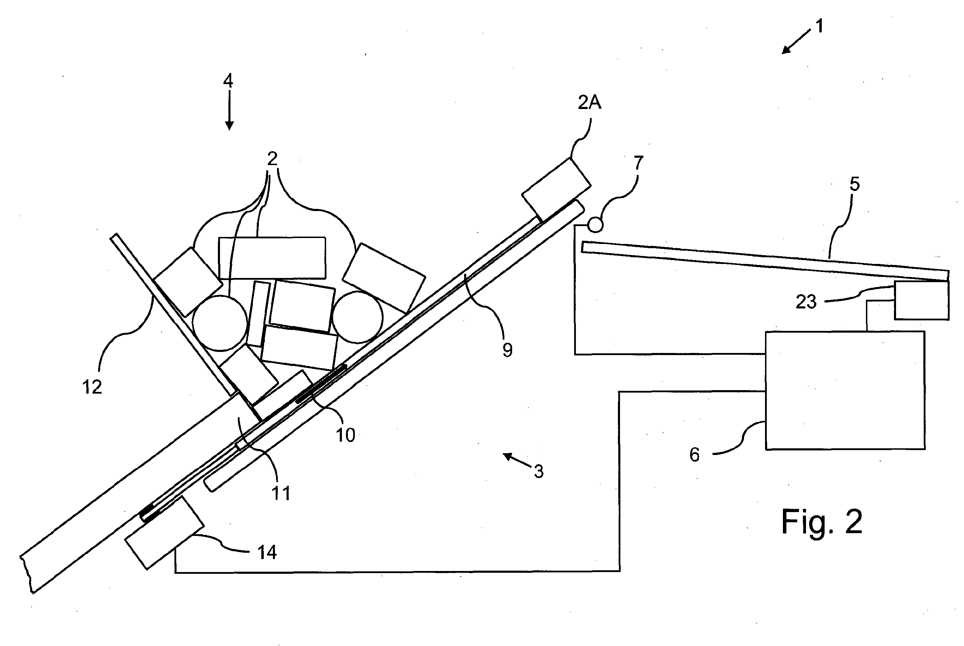

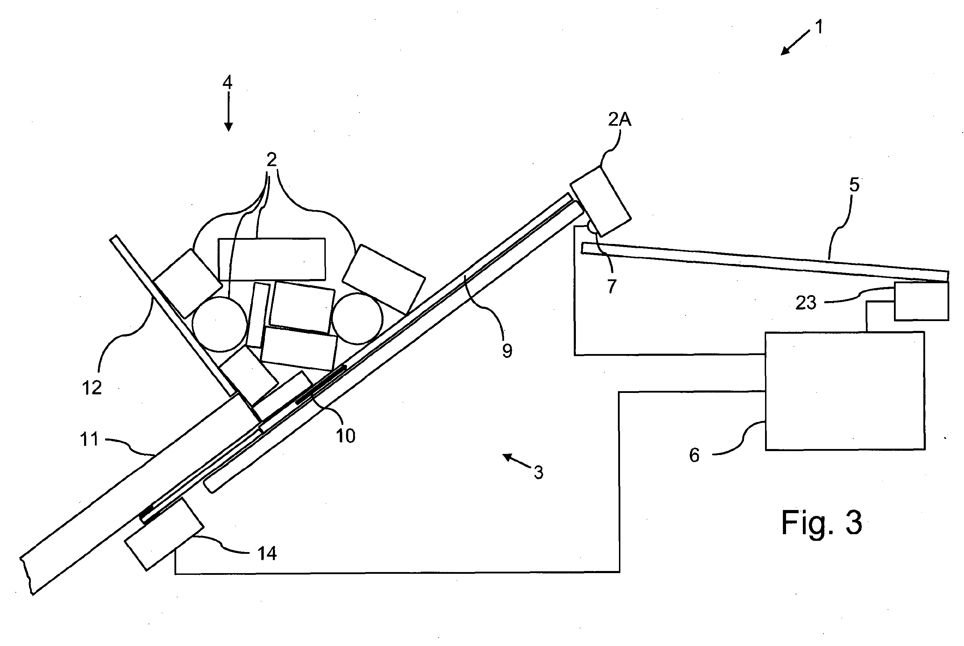

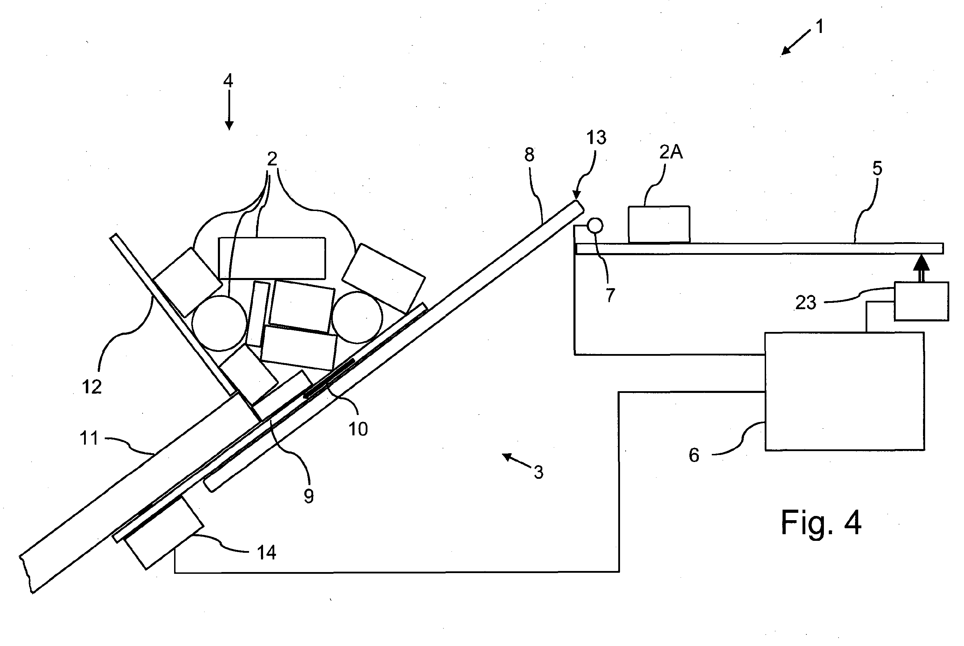

Die Figuren 1 bis 4 veranschaulichen die Funktion der ersten Förderstufe 9 zum Fördern quaderförmiger Stückgüter 2A aus dem Vorrat 4 auf die Auffangfläche 5. Figur 1 zeigt, wie die Fronfläche mit der nach oben weisenden Förderkante der Förderplatte der ersten Förderstufe 9 auf eine Seitenfläche eines auf der Auflagefläche 8 aufliegenden quaderförmigen Stückguts 2A auftrifft. Die Förderstufe 9 bewegt sich dann in Richtung des Pfeils 10, so dass das quaderförmige Stückgut 2A mitgenommen und nach oben geschoben wird. Figur 2 zeigt den Moment, in dem das Stückgut sich dem oberen Rand der Auflagefläche 8 annähert. Bei einer bevorzugten Ausführungsform ist ein (in der Zeichnung nicht dargestellter) Sensor, beispielsweise eine Lichtschranke, kurz vor dem oberen Ende der Auflagefläche 8 derart angeordnet, dass sie eine Annäherung eines oder mehrerer von der Förderstufe geschobener Stückgüter 2A an die Oberkante 13 erfasst. Sobald eine solche Annäherung erfasst worden ist, wird die Fördergeschwindigkeit verringert. Dies hat zur Folge, dass bei gleichzeitigem Schieben mehrerer Stückgüter 2A die Wahrscheinlichkeit sinkt, dass zwei oder mehr Stückgüter 2A über die Oberkante 13 hinwegtreten, bevor die Förderstufe angehalten und dann zurückgefahren werden kann. Figur 3 zeigt den Moment, in dem das Stückgut 2A über die Oberkante 13 der Auflagefläche 8 hinweg kippt und dabei in den Erfassungsbereich des Sensors 7 gerät. Unmittelbar nach dem Erfassen des Übertritts des Stückguts 2A über die Förderkante 13 und dem Auftreffen auf der Auffangfläche 5 bringt der Antrieb 23 die Auffangfläche 5 in eine waagerechte Position, so dass die Abwärts-Rutschbewegung des Stückguts 2A gestoppt wird. Figur 4 zeigt den Zustand, nachdem das Stückgut 2A auf der Auffangfläche 5 eine Ruhelage eingenommen hat. In Figur 4 ist ferner dargestellt, wie die erste Förderstufe 9 in Richtung des Pfeils 10 in die Ausgangsposition zurückgefahren wird. Die Auffangfläche 5 befindet sich in der waagerechten Lage und verbleibt in dieser, bis das Stückgut 2A entnommen worden ist. Sobald das Stückgut 2A von der Auffangfläche 5 durch die Greifeinrichtung entnommen worden ist, kann die Steuereinrichtung 6 den Antrieb 14 des Stufenförderers 3 anweisen, die erste Förderstufe 9 erneut nach oben zu fahren, wobei die Förderstufe ein weiteres Stückgut 2 oder mehrere weitere Stückgüter 2 ergreift und auf der Auflagefläche 8 nach oben schiebt.

Die erste Förderstufe 9 wird anschließend so lange nach oben und zurück verfahren, bis sämtliche quaderförmigen Stückgüter 2 über die Oberkante 13 hinweg auf die Auffangfläche 5 befördert und von dort mittels der Greifeinrichtung entnommen worden sind. Aufgrund der geringen Höhe der Förderstufe 9 werden zunächst nur die quaderförmigen Stückgüter, die auf der Auflagefläche 8 vor der Förderstufe 9 zum Liegen kommen, nach oben und weiter auf die Auffangfläche 5 befördert.

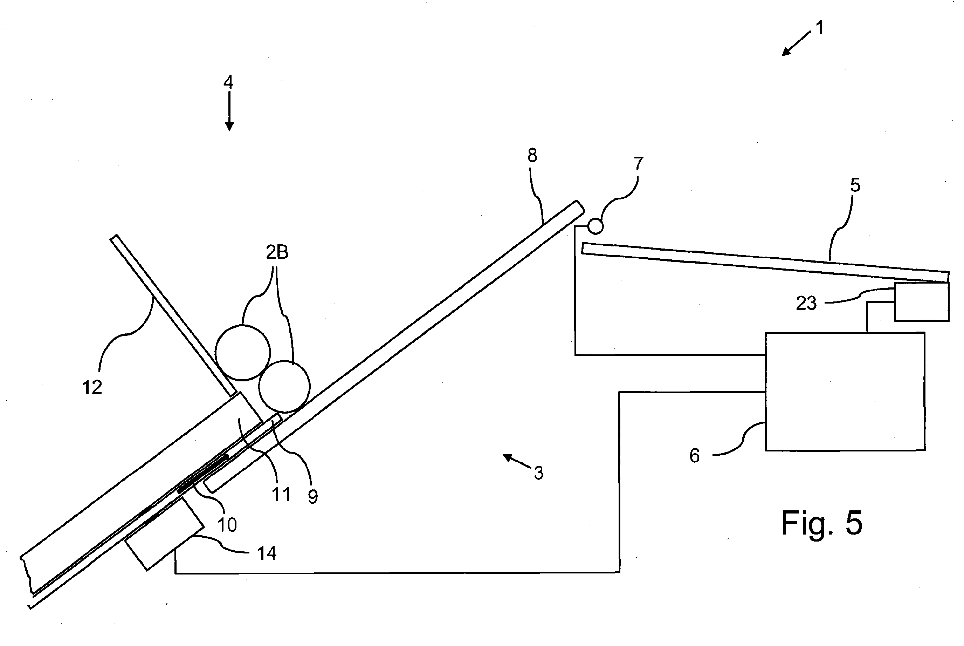

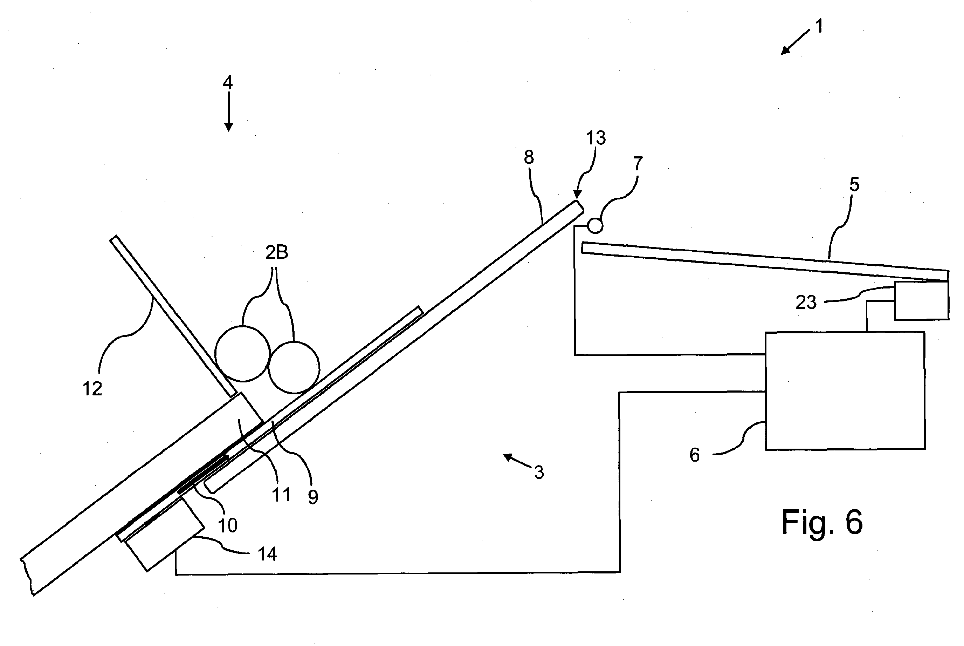

Figur 5 zeigt schematisch den Zustand, der sich ergibt, nachdem sämtliche quaderförmigen Stückgüter gefördert worden sind. Bei dem dargestellten Beispiel verbleiben zwei zylinderförmige Stückgüter 2B im Vorratsraum 4. In den Figuren 5 und 6 ist dargestellt, wie die Steuereinrichtung 6 erneut den Antrieb 14 des Stufenförderers 13 derart ansteuert, dass dieser die erste Förderstufe 9 nach oben bewegt. Dabei kann aber kein weiteres Stückgut über die Oberkante 13 hinweg befördert werden, so dass die Steuereinrichtung 6 aufgrund des Signals des Sensors 7 erkennt, dass mit Hilfe der ersten Förderstufe 9 keine weiteren Stückgüter 2 befördert werden können.

Bei einer alternativen Ausführungsform ist es auch denkbar, dass das Ansteuern der ersten Förderstufe 9 einige (wenige) Male wiederholt wird, nachdem von dem Sensor 7 kein Auftreffen eines Stückguts 2 auf der Auffangfläche 5 erfasst worden ist. Beispielsweise könnte dies zwei- oder dreimal wiederholt werden. Dies dient der Sicherstellung, dass auch ein möglicherweise zunächst noch nicht erfasstes letztes quaderförmiges Stückgut bei einem der weiteren Förderversuche befördert wird, beispielsweise dann, wenn es zunächst in eine geeignete Lage innerhalb des Vorrats gekippt werden musste (Beispielsweise könnte ein erster Förderversuch zu einem Kippen des letzten quaderförmigen Stückguts führen, so dass das Hinaufbefördern des quaderförmigen Stückguts erst im zweiten Versuch gelingt).

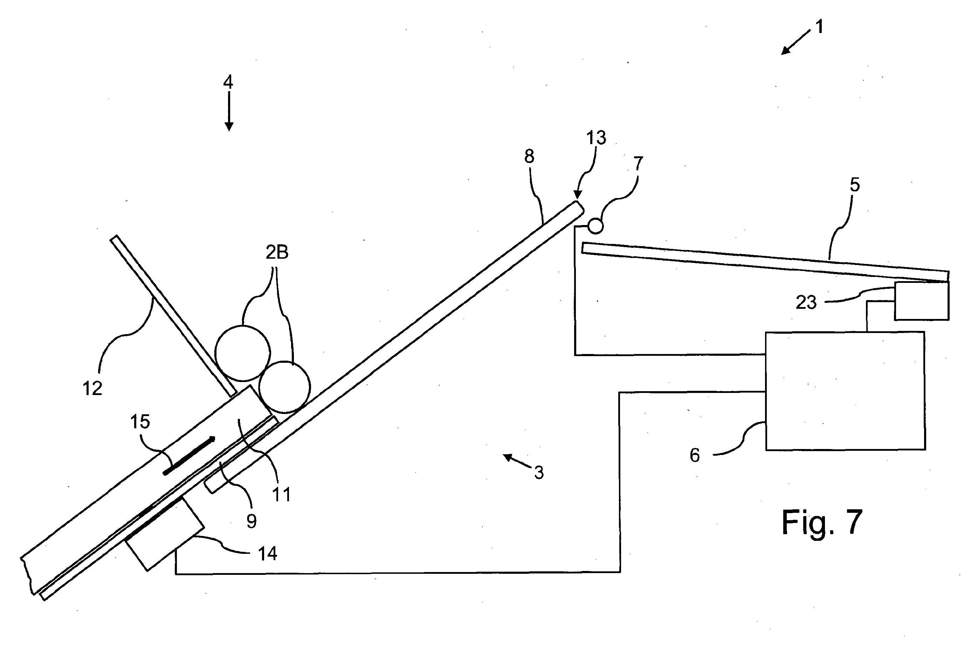

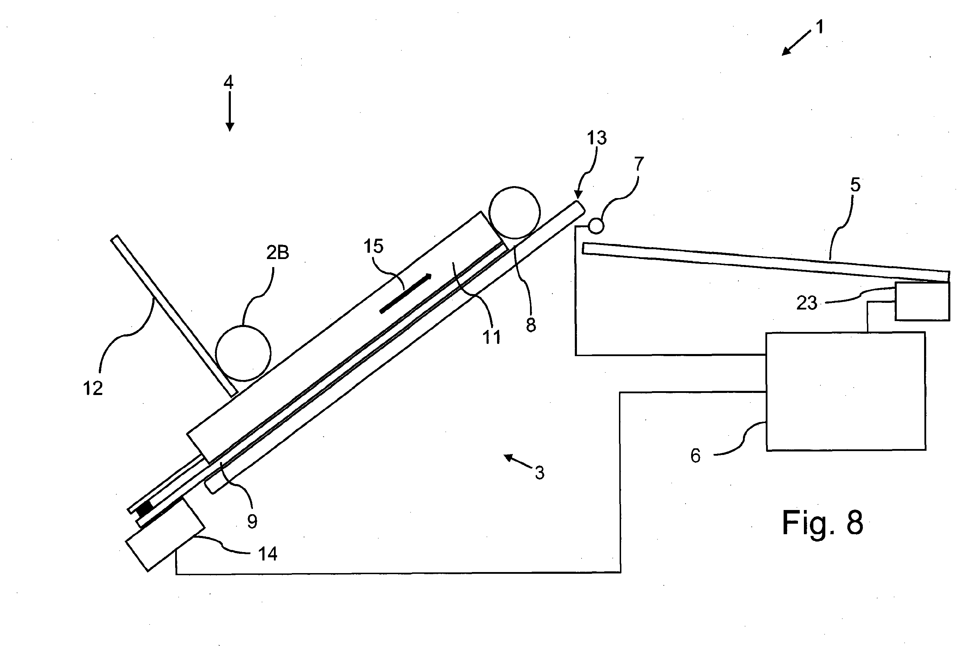

Nachdem dann die Steuereinrichtung 6 erfasst hat, dass mit Hilfe der ersten Förderstufe 9 keine weiteren (quaderförmigen) Stückgüter 2 mehr transportiert werden können, geht die Steuereinrichtung 6 zunächst von der Annahme aus, dass sich möglicherweise noch zylinderförmige Stückgüter in dem Vorrat 4 befinden. Sie steuert daraufhin mit Hilfe des Antriebs 14 eine zweite Förderstufe 11 an, wie es in den Figuren 7 und 8 veranschaulicht ist. Figur 7 zeigt den Moment, in dem die Bewegung der zweiten Förderstufe 11 entlang des Pfeils 15 beginnt. Die Frontfläche der zweiten Förderstufe 11 liegt an einem zylinderförmigen Stückgut 2B an. Figur 8 zeigt den Zeitpunkt, zu dem das zylinderförmige Stückgut 2B auf der Auflagefläche 8 durch die Aufwärtsbewegung der zweiten Förderstufe 11 nach oben bewegt (gerollt und/oder geschoben) worden ist, kurz bevor die Oberkante 13 erreicht ist. Durch weiteres Aufwärtsbewegen der zweiten Förderstufe 11 wird schließlich das zylinderförmige Stückgut 2B über die Oberkante 13 hinweg auf die Auffangfläche 5 transportiert. Dort kann das Stückgut 2B erfasst und von der Greifeinrichtung unter Steuerung der Steuereinrichtung 6 weitertransportiert werden.

Bei dem in den Figuren 7 und 8 dargestellten bevorzugten Ausführungsbeispiel wird die erste Förderstufe 9 parallel mit der zweiten Förderstufe 11 nach oben bewegt. Bei einer hier nicht dargestellten, alternativen Ausführungsform könnte die erste Förderstufe 9 in zurückgezogener Position bleiben, während sich die zweite Förderstufe 11 aufwärts bewegt. en.

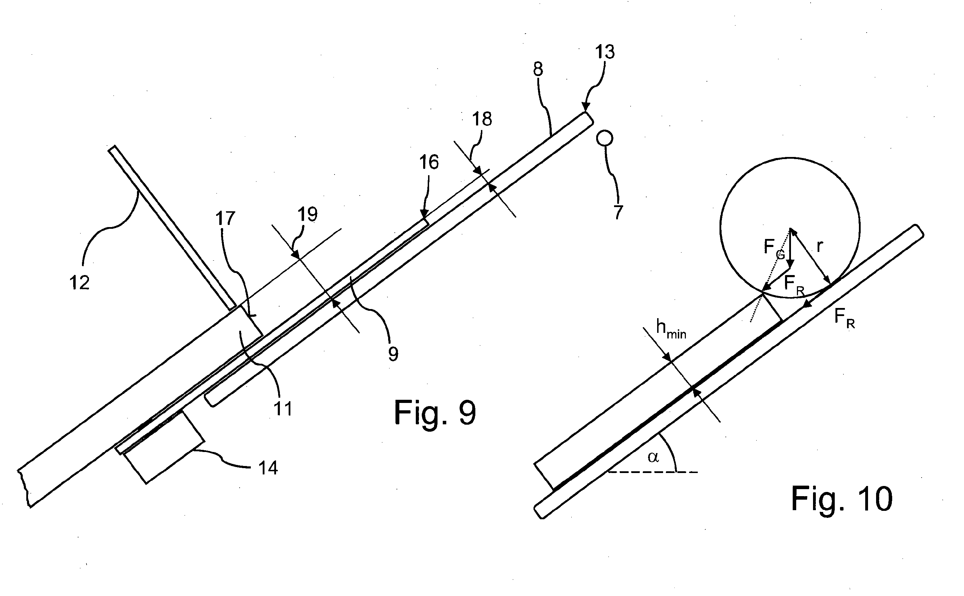

Figur 9 veranschaulicht noch einmal näher die Elemente des Stufenförderers 3 (ohne aufliegende Stückgüter 2). Über einer Auflagefläche 8 sind bei dem gezeigten Ausführungsbeispiel zwei Förderstufen, nämlich eine erste Förderstufe 9 und eine zweite Förderstufe 11 angeordnet. Beide Förderstufen 9 und 11 werden von einem hier nur schematisch dargestellten Antrieb 14 bewegt. Die erste Förderstufe 9 mit ihrer nach oben weisenden Förderkante 16 hat die Stufenhöhe 18, welche vorzugsweise 8 - 20 mm, beispielsweise 15 mm, beträgt und sich beispielsweise aus einer Plattendicke von 10 mm und einem Luftspalt von 5 mm unter der Platte zusammensetzt. Die Förderkante 16 kann (wie es bei dem Beispiel dargestellt ist) durch eine rechtwinklige Außenkante gebildet sein. Es ist aber auch denkbar, dass die Kante spitzwinklig ausgebildet ist, dass nur die Kante selbst, nicht aber die Frontfläche, an der Seitenwand des auf der Auflagefläche 8 aufliegenden, nach oben zu transportierenden Stückguts anliegt. Die zweite Förderstufe 11 ist in der zurückgezogenen Position dargestellt und hat die dargestellte Stufenhöhe 19, welche beispielsweise 45 mm beträgt. Die zweite Förderstufe weist eine Förderfrontfläche 17 auf, mit der sie die zu transportierenden (zylinderförmigen) Stückgüter nach oben schiebt. Ferner ist in Figur 9 eine Begrenzungswand 12 des Vorratsbunkers 4 dargestellt sowie der Sensor 7, der den Übertritt der Stückgüter über die Oberkante 13 der Auflagefläche 8 erfasst.

Figur 10 veranschaulicht die Dimensionierung der Mindesthöhe hₘᵢₙ der zweiten Förderstufe in Abhängigkeit von dem maximal zu erwartenden Radius r zu fördernder zylindrischer Stückgüter und von dem Neigungswinkel α der Auflagefläche 8. Würde man die auftretenden Trägheitskräfte und die Reibung, insbesondere die Haftreibung, beim Anschieben der Stückgüter vernachlässigen, ergäbe sich eine Mindesthöhe hₘᵢₙ der zweiten Stufe, die dem Radius r der zylindrischen Stückgüter abzüglich des Produkts aus dem Radius r und dem Kosinus der Neigung (cos α) entspräche, also hₘᵢₙ = r - r * cos α = r * (1 - cos α)

Die so ermittelte Mindeststufenhöhe hₘᵢₙ erhöht sich noch aufgrund der beim Hochschieben auftretenden Reibungs- und Trägheitskräfte, die in Figur 10 durch F_{R} gekennzeichnet sind, wobei in Figur 10 das Zusammensetzen eines Gewichtskraftvektors mit dem (verschobenen) Reibungskraftvektor dargestellt ist. Die Oberkante der Stufe mit der Höhe hₘᵢₙ darf nicht unterhalb des Schnittspunkts angreifen, in dem der verlängerte Vektor der zusammengesetzten Kraft (dargestellt als punktierte Linie) den Mantel des zylindrischen Stückguts schneidet, da anderenfalls ein Kippen über die Stufe droht. Die genannte Erhöhung der Mindeststufenhöhe hₘᵢₙ wächst mit dem Verhältnis von Reibungs- und Trägheitskräften F_{R} zum Gewicht F_{G} des Stückguts, wird jedoch nicht größer als der maximal zu erwartende Radius r. Insbesondere leichte zylindrische Stückgüter (mit geringer Gewichtskraft) mit großer Reibungskraft erfordern eine höhere Stufe, die sich mehr dem Maximalwert der Mindeststufenhöhe Max(hₘᵢₙ) = r, dem Radius, annähert. Die Mindeststufenhöhe ist gegebenenfalls experimentell zu ermitteln.

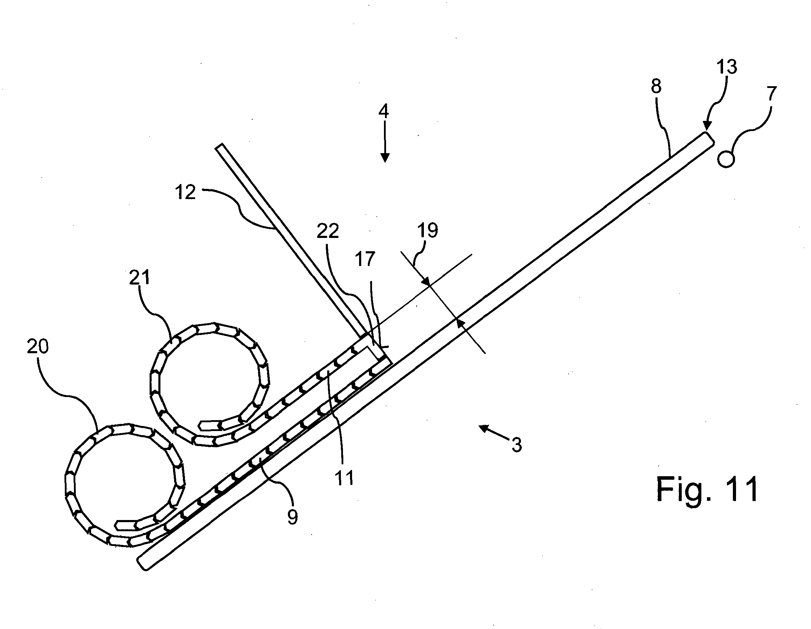

Figur 11 zeigt schematisch eine bevorzugte Gestaltung der Platten der beiden Stufen 9 und 11 in Form von Rolläden. Die Platten der ersten Stufe 9 und der zweiten Stufe 11 sind jeweils aus einer Vielzahl paralleler, schwenkbar gekoppelter Streifensegmente gebildet, die über der Auflagefläche 8 in parallelen seitlichen Führungen (nicht dargestellt) geführt sind und am unteren Ende der Auflagefläche 8 in bogenförmigen seitlichen Führungen geführt sind. Dadurch wird der in der Ebene der Auflagefläche 8 benötigte Bauraum verkürzt. Darüber hinaus sind die Segmente der zweiten Stufe ebenso dick wie die Segmente der ersten Stufe gewählt, was die Herstellung vereinfacht. Die zweite Stufe 11 weist am oberen Rand eine von dem obersten Segment senkrecht zur Auflagefläche 8 abgewinkelte Platte 22 auf, deren Frontfläche 17 die die Stufenhöhe bestimmende Förderfläche bildet.

## Patentansprüche

1. Vorrichtung (1) zum Vereinzeln von in ein automatisiertes Lager einzulagernden Stückgütern (2, 2A) mit
einem Stufenförderer (3) zum Fördern von Stückgütern (2, 2A) aus einem Vorrat (4) über eine Oberkante (13) des Stufenförderers hinweg auf eine Auffangeinrichtung (5), wobei der Stufenförderer (3) eine geneigte Auflagefläche (8) und eine parallel über der Auflagefläche (8) bewegbare erste Stufe (9) mit einer zur Auflagefläche parallelen Förderkante (16) umfasst, wobei der Abstand (18) zwischen der Auflagefläche (8) und der Förderkante (16) einer minimalen Stufenhöhe entspricht, die zum Aufwärtsschieben quaderförmiger Stückgüter (2A) ausreicht, und
einer Steuereinrichtung (6) zum Ansteuern des Stufenförderers (3), die mit einem Sensor (7) gekoppelt ist, der erfasst, ob ein Stückgut (2A) über die Oberkante (13) hinweg gefördert worden ist,
**dadurch gekennzeichnet,**
**dass** der Stufenförderer (3) eine parallel über der ersten Stufe (9) und der Auflagefläche (8) bewegbare zweite Stufe (11) mit einer Stufenhöhe (19) aufweist, die mindestens so hoch ist, dass die zweite Stufe (11) zum Fördern zylinderförmiger Stückgüter (2B) mit dem größten zu erwartenden Durchmesser geeignet ist, und
**dass** die Steuereinrichtung (6) so ausgebildet ist, dass sie den Stufenförderer (3) derart ansteuert, dass nach einem Befüllen des Vorrats (4) solange die erste Stufe (9) wiederholt angesteuert wird, bis der Sensor (7) kein Fördern eines weiteren Stückguts (2A) mehr erfasst, und daraufhin die zweite Stufe (11) angesteuert wird.

2. Vorrichtung zum Vereinzeln nach Anspruch 1, **dadurch gekennzeichnet, dass** die Steuereinrichtung (6) so ausgebildet ist, dass sie den Stufenförderer (3) derart ansteuert, dass anschließend die zweite Stufe (11) wiederholt angesteuert wird, bis der Sensor (7) kein Fördern eines weiteren Stückguts (2A) mehr erfasst.

3. Vorrichtung zum Vereinzeln nach Anspruch 1 oder 2, **dadurch gekennzeichnet, dass** die Steuereinrichtung (6) so ausgebildet ist, dass sie den Stufenförderer (3) derart ansteuert, dass die erste Stufe (9) zurückgefahren wird oder mit der zweiten Stufe mitbewegt wird, während die zweite Stufe (11) angesteuert wird.

4. Vorrichtung zum Vereinzeln nach einem der Ansprüche 1 - 3, **dadurch gekennzeichnet, dass** die erste Stufe (9) eine ebene Platte mit einer sich an die Förderkante (16) anschließenden, zur Plattenebene senkrechten Förderfläche umfasst.

5. Vorrichtung zum Vereinzeln nach einem der Ansprüche 1 - 4, **dadurch gekennzeichnet, dass** die zweite Stufe (11) eine ebene Platte mit einer zur Plattenebene senkrechten Förderfläche (17) umfasst.

6. Vorrichtung zum Vereinzeln nach Anspruch 4 oder 5, **dadurch gekennzeichnet, dass** die Platte der ersten und/oder der zweiten Stufe aus einer Vielzahl paralleler, schwenkbar gekoppelter Streifensegmente gebildet ist, die über der Auflagefläche (8) in parallelen seitlichen Führungen geführt sind und am unteren Ende der Auflagefläche (8) auf eine Rolle aufwickelbar oder in bogenförmigen seitlichen Führungen derart geführt sind, dass der in der Ebene der Auflagefläche (8) benötigte Bauraum verkürzt wird.

7. Vorrichtung zum Vereinzeln nach einem der Ansprüche 1 - 6, **dadurch gekennzeichnet, dass** der Sensor (7) ein Auftreffen von Stückgütern (2A) auf der Auffangeinrichtung (5) erfasst, wobei die Steuereinrichtung (6) bei Erfassen eines Auftreffens eines Stückguts oder mehrerer Stückgüter (2, 2A) auf der Auffangeinrichtung (5) das Fördern weiterer Stückgüter (2) auf die Auffangeinrichtung (5) solange unterbricht, bis das Stückgut bzw. die Stückgüter von der Auffangeinrichtung entnommen und weitertransportiert worden sind.

8. Vorrichtung zum Vereinzeln nach einem der Ansprüche 1 - 7, **dadurch gekennzeichnet, dass** die Auffangeinrichtung eine Platte aufweist, die um eine zur Oberkante (13) parallele und benachbarte Achse schwenkbar ist, wobei ein Schwenkantrieb mit der Steuereinrichtung (6) gekoppelt ist, wobei die Platte vor dem Fördern eines Stückguts (2) über die Oberkante (13) derart geneigt ist, dass sie von der Oberkante (13) weg abfällt, so dass auftreffende Stückgüter (2) auf der Platte abwärts rutschen können, und wobei die Steuereinrichtung (6) bei Erfassen eines Auftreffens eines Stückguts oder mehrerer Stückgüter (2, 2A) auf der Auffangeinrichtung (5) die Platte über den Schwenkantrieb in die Horizontale bewegt, so dass das Weiterrutschen der Stückgüter gebremst wird.

9. Verfahren zum Vereinzeln von in ein automatisiertes Lager einzulagernden Stückgütern unter Verwendung eines Stufenförderers mit
einer geneigten Auflagefläche mit einer Oberkante,
einem am unteren Ende der Auflagefläche angeordneten Vorrat zur Aufnahme von Stückgütern, die quaderförmige und zylinderförmige Stückgüter umfassen,
einer vom Vorrat bis zur Oberkante parallel über der Auflagefläche bewegbaren ersten Stufe mit einer zur Auflagefläche parallelen Förderkante, wobei der Abstand zwischen der Auflagefläche und der Förderkante einer minimalen Stufenhöhe entspricht, die zum Aufwärtsschieben quaderförmiger Stückgüter ausreicht, und
einer parallel über der ersten Stufe und der Auflagefläche bewegbaren zweiten Stufe mit einer Stufenhöhe, die mindestens so hoch ist, dass die zweite Stufe zum Fördern zylinderförmiger Stückgüter mit dem größten zu erwartenden Durchmesser geeignet ist,
wobei
der Vorrat mit Stückgütern befüllt wird,
die erste Stufe zum Fördern von Stückgütern solange wiederholt vom Vorrat hin zur Oberkante bewegt wird, bis kein Fördern eines weiteren Stückguts über die Oberkante mehr erfasst wird, und
daraufhin die zweite Stufe zum Fördern von Stückgütern vom Vorrat hin zur Oberkante bewegt wird.

10. Verfahren zum Vereinzeln nach Anspruch 9, **dadurch gekennzeichnet, dass** anschließend die zweite Stufe wiederholt vom Vorrat hin zur Oberkante bewegt wird, bis kein Fördern eines weiteren Stückguts über die Oberkante mehr erfasst wird.

11. Verfahren zum Vereinzeln nach Anspruch 9 oder 10, **dadurch gekennzeichnet, dass** die erste Stufe zurückgefahren oder mit der zweiten Stufe mitbewegt wird, während die zweite Stufe bewegt wird.

## Claims

1. A device (1) for singularizing unit loads (2, 2A) to be stored in an automated storage facility, with
a step conveyor (3) for conveying unit loads (2, 2A) from a supply facility (4) onto a receiving device (5) over an upper edge (13) of the step conveyor, wherein the step conveyor (3) comprises an inclined supporting surface (8) and a first step (9) that can be moved above the supporting surface (8) in a parallel fashion and features a conveying edge (16) arranged parallel to the supporting surface, and wherein the distance (18) between the supporting surface (8) and the conveying edge (16) corresponds to a minimal step height that suffices for pushing cuboid unit loads (2A) upward, and
a control unit (6) that serves for actuating the step conveyor (3) and is coupled to a sensor (7) that detects whether a unit load (2A) was conveyed over the upper edge (13),
**characterized in**
**that** the step conveyor (3) features a second step (11) that can be moved above the first step (9) and the supporting surface (8) in a parallel fashion and has a step height (19) that is at least so high that the second step (11) is suitable for conveying cylindrical unit loads (2B) with the largest expected diameter, and
**that** the control unit (6) is designed for actuating the step conveyor (3) in such a way that, after a stocking the supply facility (4), the first step (9) is actuated repeatedly until the sensor (7) no longer detects the conveying of an additional unit load (2A) and the second step (11) is subsequently actuated.

2. The singularizing device according to claim 1, **characterized in that** the control unit (6) is designed for actuating the step conveyor (3) in such a way that the second step (11) is subsequently actuated repeatedly until the sensor (7) no longer detects the conveying of an additional unit load (2A).

3. The singularizing device according to claim 1 or 2, **characterized in that** the control unit (6) is designed for actuating the step conveyor (3) in such a way that the first step (9) is retracted or moved together with the second step while the second step (11) is actuated.

4. The singularizing device according to one of claims 1 to 3, **characterized in that** the first step (9) comprises a plane plate with a conveying surface that adjoins the conveying edge (16) and extends perpendicular to the plane of the plate.

5. The singularizing device according to one of claims 1 to 4, **characterized in that** the second step (11) comprises a plane plate with a conveying surface (17) that extends perpendicular to the plane of the plate.

6. The singularizing device according to claim 4 or 5, **characterized in that** the plate of the first and/or the second step is composed of a plurality of parallel, pivotably coupled strip segments that are guided above the supporting surface (8) in parallel lateral guides and on the lower end of the supporting surface (8) can be wound up on a roll or are guided an arc-shaped lateral guides such that the installation space required in the plane of the supporting surface (8) is reduced.

7. The singularizing device according to one of claims 1 to 6, **characterized in that** the sensor (7) detects an impact of unit loads (2A) on the receiving device (5), wherein the control unit (6) interrupts the conveying of additional unit loads (2) onto the receiving device (5) when an impact of a unit load or several unit loads (2, 2A) on the receiving device (5) is detected until the respective unit load or unit loads has/have been removed from the receiving device and transported onward.

8. The singularizing device according to one of claims 1 to 7, **characterized in that** the receiving device features a plate that can be pivoted about an axis situated adjacent and extending parallel to the upper edge (13), wherein a pivoting drive is coupled to the control unit (6), wherein the plate is prior to the conveying of a unit load (2) over the upper edge (13) inclined in such a way that it drops away from the upper edge (13) and impacting unit loads (2) can slide downward on the plate, and wherein the control unit (6) moves the plate into the horizontal plane by means of the pivoting drive when an impact of a unit load or several unit loads (2, 2A) on the receiving device (5) is detected such that the further sliding motion of the unit loads is decelerated.

9. A method for singularizing unit loads to be stored in an automated storage facility by utilizing a step conveyor with
an inclined supporting surface with an upper edge,
a supply facility that is arranged on the lower end of the supporting surface and serves for accommodating unit loads comprising cuboid and cylindrical unit loads,
a first step that can be moved from the supply facility up to the upper edge above the supporting surface in a parallel fashion and features a conveying edge arranged parallel to the supporting surface, wherein the distance between the supporting surface and the conveying edge corresponds to a minimal step height that suffices for pushing cuboid unit loads upward, and
a second step that can be moved above the first step and the supporting surface in a parallel fashion and has a step height that is at least so high that the second step is suitable for conveying cylindrical unit loads with the largest expected diameter,
wherein
the supply facility is stocked with unit loads,
the first step is repeatedly moved from the supply facility toward the upper edge in order to convey unit loads until the conveying of an additional unit load over the upper edge is no longer detected, and
the second step is subsequently moved from the supply facility toward the upper edge in order to convey unit loads.

10. The singularizing method according to claim 9, **characterized in that** the second step is subsequently moved repeatedly from the supply facility toward the upper edge until the conveying of an additional unit load over the upper edge is no longer detected.

11. The singularizing method according to claim 9 or 10, **characterized in that** the first step is retracted or moved together with the second step while the second step is moved.

## Revendications

1. Dispositif (1) pour la séparation de marchandises (2, 2A) à stocker dans un entrepôt automatisé, avec
un convoyeur à étages (3) pour le transport de marchandises (2, 2A) à partir d'une réserve (4), au-delà d'un bord supérieur (13) du convoyeur à étages, sur un dispositif de capture (5), dans lequel le convoyeur à étages (3) comprend une surface d'appui inclinée (8) et un premier étage (9) déplaçable parallèlement au-dessus de la surface d'appui (8), avec un bord de transport (16) parallèle à la surface d'appui, dans lequel l'espacement (18) entre la surface d'appui (8) et le bord de transport (16) correspond à une hauteur d'étage minimale, appropriée pour pousser des marchandises rectangulaires (2A) vers le haut, et
un dispositif de commande (6) pour l'actionnement du convoyeur à étages (3), lequel est couplé à un capteur (7) détectant si une marchandise (2A) a été transportée au-delà du bord supérieur (13),
**caractérisé en ce que**
le convoyeur à étages (3) comporte un deuxième étage (11) déplaçable parallèlement au-dessus du premier étage (9) et de la surface d'appui (8), avec une hauteur d'étage (19) suffisante pour permettre au deuxième étage (11) de transporter des marchandises cylindriques (2B) avec le plus grand diamètre attendu, et
le dispositif de commande (6) est conçu pour commander le convoyeur à étages (3) de manière à ce que, suite à un remplissage de la réserve (4), le premier étage (9) soit actionné de façon répétée jusqu'à ce que le capteur (7) ne détecte plus de transport d'une marchandise (2A) supplémentaire, et le deuxième étage (11) est alors actionné.

2. Dispositif de séparation selon la revendication 1, **caractérisé en ce que** le dispositif de commande (6) est conçu pour commander le convoyeur à étages (3) de manière à ce que le deuxième étage (11) soit ensuite actionné de façon répétée jusqu'à ce que le capteur (7) ne détecte plus de transport d'une marchandise (2A) supplémentaire.

3. Dispositif de séparation selon la revendication 1 ou 2, **caractérisé en ce que** le dispositif de commande (6) est conçu pour commander le convoyeur à étages (3) de manière à ce que le premier étage (9) soit reculé ou déplacé avec le deuxième étage, pendant que le deuxième étage (11) est actionné.

4. Dispositif de séparation selon l'une des revendications 1 à 3, **caractérisé en ce que** le premier étage (9) comprend un plateau plat avec une surface de transport verticale au plan du plateau, disposée à la suite du bord de transport (16).

5. Dispositif de séparation selon l'une des revendications 1 à 4, **caractérisé en ce que** le deuxième étage (11) comprend un plateau plat avec une surface de transport (17) verticale au plan du plateau.

6. Dispositif de séparation selon la revendication 4 ou 5, **caractérisé en ce que** le plateau du premier et/ou du deuxième étage est constitué d'une multitude de segments de bande parallèles et accouplés de façon pivotante, lesquels sont guidés au-dessus de la surface d'appui (8) dans des guidages latéraux parallèles et peuvent être enroulés sur un rouleau à l'extrémité inférieure de la surface d'appui (8) ou lesquels sont guidés de manière à diminuer l'espace de construction nécessaire dans le plan de la surface d'appui (8).

7. Dispositif de séparation selon l'une des revendications 1 à 6, **caractérisé en ce que** le capteur (7) détecte l'arrivée de marchandises (2A) sur le dispositif de capture (5), dans lequel le dispositif de commande (6) interrompt le transport de marchandises supplémentaires (2) sur le dispositif de capture (5) lors de la détection d'une arrivée d'une marchandise ou de plusieurs marchandises (2, 2A) sur le dispositif de capture (5), jusqu'à ce que la marchandise ou les marchandises soit/soient récupérée(s) par le dispositif de capture et transportées plus loin.

8. Dispositif de séparation selon l'une des revendications 1 à 7, **caractérisé en ce que** le dispositif de capture comporte un plateau pivotant autour d'un axe voisin et parallèle au bord supérieur (13), dans lequel un entraînement de pivotement est accouplé à un dispositif de commande (6), dans lequel, avant le transport d'une marchandise (2), le plateau est incliné par-dessus le bord supérieur (13) de manière à s'éloigner du bord supérieur (13) vers le bas, de sorte que les marchandises (2) arrivantes peuvent glisser vers le bas sur le plateau, et dans lequel le dispositif de commande (6) fait bouger le plateau horizontalement au-dessus de l'entraînement de pivotement lors de la détection de l'arrivée d'une marchandise ou de plusieurs marchandises (2, 2A) sur le dispositif de capture (5), afin de freiner le glissement des marchandises.

9. Procédé pour la séparation de marchandises à stocker dans un entrepôt automatisé, à l'aide d'un convoyeur à étages, avec
une surface d'appui avec un bord supérieur,
une réserve agencée à l'extrémité inférieure de la surface d'appui pour l'admission de marchandises comprenant des marchandises rectangulaires et cylindriques,
un premier étage déplaçable parallèlement au-dessus de la surface d'appui, de la réserve jusqu'au bord supérieur, avec un bord de transport parallèle à la surface d'appui, dans lequel l'espacement entre la surface d'appui et le bord de transport correspond à une hauteur d'étage minimale, suffisante pour pousser des marchandises rectangulaires vers le haut, et
un deuxième étage déplaçable parallèlement au-dessus du premier étage et de la surface d'appui, avec une hauteur d'étage au moins suffisante pour permettre au deuxième étage de transporter des marchandises cylindriques avec le plus grand diamètre attendu,
dans lequel
la réserve est remplie de marchandises,
le premier étage pour le transport de marchandises est déplacé de façon répétée, de la réserve vers le bord supérieur, jusqu'à ce qu'un transport d'une marchandise supplémentaire au-delà du bord supérieur ne soit plus détecté, et
le deuxième étage est alors déplacé de la réserve vers le bord supérieur pour le transport de marchandises.

10. Procédé pour la séparation selon la revendication 9, **caractérisé en ce que** le deuxième étage est ensuite déplacé de façon répétée de la réserve vers le bord supérieur, jusqu'à ce qu'un transport d'une marchandise supplémentaire au-delà du bord supérieur ne soit plus détecté.

11. Procédé pour la séparation selon la revendication 9 ou 10, **caractérisé en ce que** le premier étage est reculé ou déplacé ensemble avec le deuxième étage pendant le déplacement du deuxième étage.
